# EUROPEAN PATENT SPECIFICATION

(11) **EP 4 316 725 B1**
(45) Date of publication and mention of the grant of the patent: **30.07.2025**
(21) Application number: 22780150.3
(22) Date of filing: 17.03.2022
(51) Int. Cl.: B23K 26/064, B23K 26/066, B23K 26/06, B23K 26/21, B23K 26/38, B23K 26/70, B23K 26/382

(54) **LASER MACHINING HEAD, AND LASER MACHINING SYSTEM COMPRISING SAME**
LASERBEARBEITUNGSKOPF UND LASERBEARBEITUNGSSYSTEM DAMIT
TÊTE D'USINAGE LASER ET SYSTÈME D'USINAGE LASER LA COMPRENANT

(30) Priority: 02.04.2021 JP 2021063722
(43) Date of publication of application: 07.02.2024
(73) Proprietor: Panasonic Intellectual Property Management Co., Ltd., Kadoma-shi, Osaka 571-0057 (JP)
(72) Inventor: OGUCHI, Hisayuki, Kadoma-shi, Osaka 571-0057 (JP); TAKAHASHI, Wataru, Kadoma-shi, Osaka 571-0057 (JP)
(74) Representative: Novagraaf International SA
(86) International application number: PCT/JP2022/012128
(87) International publication number: WO 2022/209930

(56) References cited:
- WO-A1-2018/097018
- WO-A1-2020/207662
- CN-A- 112 045 301
- DE-A1- 102018 128 266
- JP-A- 2001 018 086
- JP-A- H10 296 468
- US-A1- 2018 161 923

## Description

### TECHNICAL FIELD

The present disclosure relates to a laser processing head, particularly a laser processing head that emits two laser beams having wavelengths different from each other and a laser processing system including the laser processing head.

### BACKGROUND ART

A laser processing system performs laser processing such as cutting, welding, and drilling of a workpiece. In the laser processing system, a laser processing head irradiates a workpiece with a laser beam emitted from a laser oscillator and guided through an optical fiber. The laser processing head is provided with a condensing optical system for condensing the laser beam and irradiating the workpiece with the laser beam.

For example, in PTLs 1 and 2, a laser processing system that transmits a laser beam emitted from a laser oscillator and irradiates a workpiece via a plurality of optical systems is disclosed. A laser beam emitted from an optical fiber is converted into parallel light by a collimator lens, is condensed by a condensing lens, and is applied to a front surface of the workpiece. The collimator lens and the condensing lens are provided to be movable in an optical axis direction of the laser beam. A diameter of the laser beam on the front surface of the workpiece can be converted by moving the collimator lens and the condensing lens in the optical axis direction. PTL 3 relates to a light modulation control method and device which control light condensing irradiation of laser light onto a light condensing point by a modulation pattern to be presented in a spatial light modulator.

### Citation List

### Patent Literature

PTL 1: Unexamined Japanese Patent Publication No. 2009-226473
PTL 2: Unexamined Japanese Patent Publication No. 2014-079802
PTL 3: US 2018/161923 A1

### SUMMARY OF THE INVENTION

### Technical problem

In recent years, a hybrid laser processing system using two types of laser beams having wavelengths different from each other, such as near-infrared light and blue light, for example, has been known. The hybrid laser processing system combines two types of laser beams having wavelengths different from each other on an identical optical axis by a laser processing head, condenses the combined two types of laser beams, and irradiates the workpiece with the condensed laser beams. The hybrid laser processing system can utilize strengths of the laser beams and complement limitations of the laser beams, and thus has more advantages than a conventional laser processing system using only one type of laser beam.

However, in the hybrid laser processing system, since it is necessary to adjust a condensing position and a condensing state such as a spot diameter on the front surface of the workpiece for two types of laser beams having wavelengths different from each other, it is difficult to adjust the condensing state of the laser beam as compared with the laser processing system of the related art using only one type of laser beam.

Since the hybrid laser processing system handles two types of laser beams, the number of components constituting the system is often increased. In particular, there is a concern that a size of a laser processing head having a plurality of optical components therein is increased.

The present disclosure has been made in view of such a point, and an object of the present disclosure is to provide a laser processing head and a laser processing system including the laser processing head that can be downsized while condensing states of two types of laser beams having wavelengths different from each other are adjustable. Solution to problem

A laser processing head according to the present disclosure is a laser processing head including: a housing; and a plurality of optical components disposed inside the housing. The housing includes a first light entrance port through which a first laser beam is incident, a second light entrance port through which a second laser beam having a wavelength different from the first laser beam is incident, and a light irradiation port through which the first laser beam and the second laser beam are emitted to an outside, the plurality of optical components include at least a bend mirror that is provided in an optical path of the second laser beam, and reflects the second laser beam to change the optical path, a dichroic mirror that is provided in an optical path of the first laser beam, the dichroic mirror being provided in the optical path of the second laser beam reflected by the bend mirror, an aperture that is provided in the optical paths of the second laser beam transmitted through the dichroic mirror, the aperture being provided in the optical path of the first laser beam reflected by the dichroic mirror, and a detection-side condensing lens that is provided in the optical paths of the first laser beam and the second laser beam transmitted through the aperture, a photodetector is disposed inside the housing, the photodetector being at a position where the first laser beam and the second laser beam transmitted through the detection-side condensing lens are receivable, the dichroic mirror transmits most of the first laser beam to be directed to the light irradiation port, and reflects a rest of the first laser beam to be directed to the aperture, and reflects most of the second laser beam to be directed to the light irradiation port, and transmits a rest of the second laser beam to be directed to the aperture, and the aperture is configured to be able to reduce diameters of the first laser beam and the second laser beam incident on the detection-side condensing lens.

A laser processing system according to the present disclosure includes at least the laser processing head, a first laser oscillator that emits the first laser beam, a second laser oscillator that emits the second laser beam, a first optical fiber that is connected to the first light entrance port and transmits the first laser beam emitted from the first laser oscillator to the laser processing head, and a second optical fiber that is connected to the second light entrance port and transmits the second laser beam emitted from the second laser oscillator to the laser processing head, wherein the laser processing head irradiates a workpiece with at least one of the first laser beam or the second laser beam.

### Advantageous effect of invention

According to the present disclosure, in the hybrid laser processing system, it is possible to adjust the condensing states of two types of laser beams having wavelengths different from each other. The laser processing head can be downsized.

### BRIEF DESCRIPTION OF THE DRAWINGS

Fig. 1 is a schematic configuration diagram of a laser processing system according to an exemplary embodiment.
Fig. 2 is a schematic configuration diagram illustrating an internal structure of a laser processing head.
Fig. 3A is a schematic diagram illustrating a change in a beam diameter of a first laser beam by an aperture.
Fig. 3B is a schematic diagram illustrating a change in a beam diameter of a second laser beam by the aperture.
Fig. 4 is a schematic diagram illustrating a pixel structure of an image sensor.
Fig. 5 is a diagram illustrating an example of a relationship between light receiving efficiency and a wavelength of an RGB pixel.
Fig. 6 is a schematic diagram illustrating a pixel structure of an image sensor.
Fig. 7A is an example of an image illustrating spots of a first laser beam and a second laser beam condensed on a light receiving surface of the image sensor.
Fig. 7B is an example of an image illustrating spots of a first laser beam and a second laser beam condensed on a front surface of a workpiece.
Fig. 8A is a diagram corresponding to Fig. 7A according to a comparative example.
Fig. 8B is a diagram corresponding to Fig. 7B according to a comparative example.
Fig. 9 is a schematic diagram illustrating a main part of an internal structure of a laser processing head according to a modification.

### DESCRIPTION OF EMBODIMENT

Hereinafter, exemplary embodiments of the present disclosure will be described with reference to the drawings. Note that, the following descriptions of preferable exemplary embodiments are merely illustrative in nature, and are not intended to limit the scope, applications, or use of the present disclosure in any way.

### (Exemplary embodiment)

### [Configuration of laser processing system]

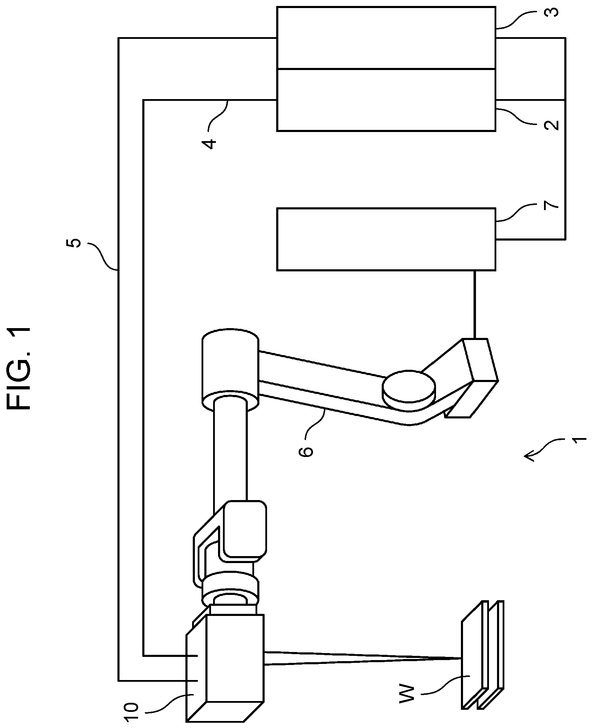

Fig. 1 illustrates laser processing system (laser processing apparatus) 1 according to the present exemplary embodiment. Laser processing system 1 is a hybrid laser processing system using two types of laser beams having different wavelengths, and performs laser processing such as cutting, welding, and drilling of workpiece W.

Laser processing system 1 includes laser processing head (laser irradiation head) 10, first laser oscillator 2 and second laser oscillator 3, first optical fiber 4, second optical fiber 5, manipulator 6, and control device 7.

First laser oscillator 2 emits first laser beam A. Second laser oscillator 3 emits second laser beam B. First laser beam A and second laser beam B have different wavelengths. First laser beam A is near-infrared light having a wavelength ranging from about 900 nm to 1200 nm inclusive. Second laser beam B is near-infrared light having a wavelength ranging from about 400 nm to 450 nm inclusive. In general, near-infrared light is applied to laser processing, but in recent years, blue light is also being applied to laser processing because of its good absorption rate to copper. Note that, second laser beam B may be green light (wavelength: from about 450 nm to 550 nm inclusive).

First optical fiber 4 transmits first laser beam A from first laser oscillator 2 to laser processing head 10. Second optical fiber 5 transmits second laser beam B from second laser oscillator 3 to laser processing head 10.

Laser processing head 10 irradiates front surface W1 of workpiece W with at least one of first laser beam A or second laser beam B. In this case, an optical axis of first laser beam A directed from laser processing head 10 toward workpiece W and an optical axis of second laser beam B are made identical. For example, in a case where front surface W1 of workpiece W is simultaneously irradiated with both first laser beam A and second laser beam B, workpiece W is irradiated with first laser beam A and second laser beam B in a state where the optical axis of first laser beam A and the optical axis of second laser beam B are overlapped with each other. Details of laser processing head 10 will be described later.

Laser processing head 10 is attached to a distal end of manipulator 6, and laser processing head 10 is moved. Control device 7 controls operation of manipulator 6 and oscillation of laser beams A and B by laser oscillators 2 and 3. Control device 7 may control operation of an actuator to be described later inside laser processing head 10.

### [Configuration of laser processing head]

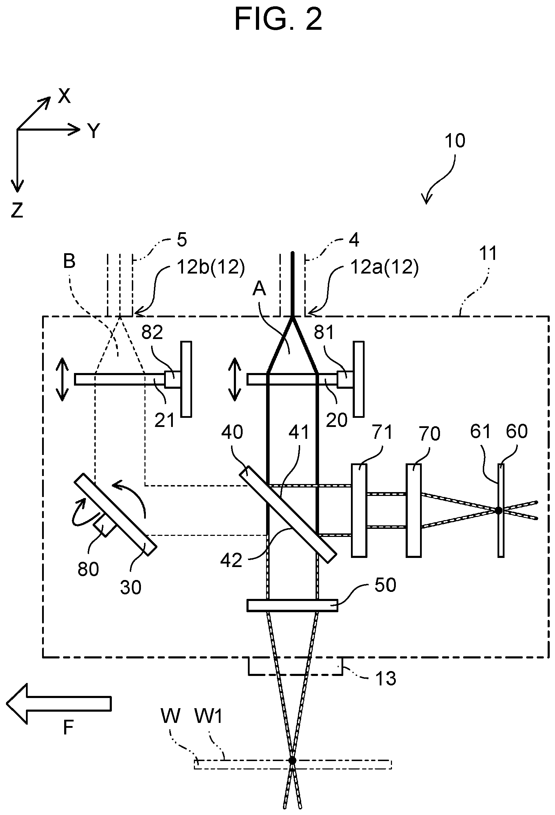

Fig. 2 illustrates an internal structure of laser processing head 10. Note that X, Y, and Z in Fig. 2 indicate directions in an orthogonal coordinate system, X and Y are horizontal directions of front, rear, left, and right, and Z is an up-down direction (vertical direction). In addition, a direction in which an optical axis (virtual ray as representative of light flux in each of laser beams A and B) of each of laser beams A and B extends is referred to as an "optical axis direction". The optical axis direction is not always constant in the orthogonal coordinate systems X, Y, and Z, and may change in accordance with traveling of each of laser beams A and B.

Laser processing head 10 condenses first laser beam A and second laser beam B by a condensing optical system provided inside housing 11, and irradiates workpiece W with first laser beam A and second laser beam B. Laser processing head 10 includes, as the condensing optical system, first collimator lens 20, second collimator lens 21, bend mirror 30, dichroic mirror 40, workpiece-side condensing lens 50, image sensor 60 as a photodetector, detection-side condensing lens 70, aperture 71, mirror-side actuator 80 as a part of an adjuster, first lens-side actuator 81 as a part of an adjuster, and second lens-side actuator 82 as a part of an adjuster.

Housing 11 is provided with first light entrance port 12a and second light entrance port 12b on an upper side in a Z direction. First light entrance port 12a and second light entrance port 12b are provided with a predetermined space from each other. First optical fiber 4 is connected to first light entrance port 12a, and first laser beam A is incident on an inside of housing 11 through first light entrance port 12a. Second optical fiber 5 is connected to second light entrance port 12b, and second laser beam B is incident on the inside of housing 11 through second light entrance port 12b. Note that, first light entrance port 12a and second light entrance port 12b may be collectively referred to as incident portion 12.

Housing 11 is provided with light irradiation port (irradiation part) 13 on a lower side in the Z direction. Front surface W1 of workpiece W is irradiated with first laser beam A and second laser beam B through protective glass (not illustrated) provided in light irradiation port 13.

First collimator lens 20 converts first laser beam A into a parallel ray. Note that, second collimator lens 21 converts second laser beam B into a parallel ray. First laser beam A and second laser beam B travel straight in the Z direction in parallel with each other until first laser beam A and second laser beam B are incident on first collimator lens 20 and second collimator lens 21, respectively.

Bend mirror 30 changes the optical axis of second laser beam B parallel to the optical axis of first laser beam A in a direction intersecting the optical axis of first laser beam A, specifically, to in a direction orthogonal to the optical axis of first laser beam A (Y direction).

Dichroic mirror 40 is a mirror that transmits most of light in a specific wavelength region and reflects most of light in the other wavelength regions. In the present exemplary embodiment, dichroic mirror 40 transmits most of first laser beam A incident from rear surface 41 substantially straight toward front surface 42, and reflects most of second laser beam B incident from front surface 42 substantially at a right angle toward front surface 42. On the other hand, dichroic mirror 40 reflects the rest of first laser beam A incident from rear surface 41 substantially at the right angle toward rear surface 41, and transmits the rest of second laser beam B incident from front surface 42 substantially straight toward rear surface 41.

Light irradiation port 13 is disposed on an optical axis direction traveling side of most of first laser beam A transmitted through dichroic mirror 40 and most of second laser beam B reflected by dichroic mirror 40. That is, dichroic mirror 40 transmits most of first laser beam A toward workpiece W and reflects most of second laser beam B toward workpiece W.

Note that, most of each of laser beams A and B is, for example, about 95% to 99.9% of each of laser beams A and B before being incident on dichroic mirror 40 in terms of energy. The rest of each of laser beams A and B is, for example, about 0.1% to 5% of each of laser beams A and B before being incident on dichroic mirror 40 in terms of energy.

Workpiece-side condensing lens 50 is disposed between dichroic mirror 40 and workpiece W in the optical axis direction. Workpiece-side condensing lens 50 condenses each of first laser beam A and second laser beam B. Front surface W1 of workpiece W is irradiated with condensed first laser beam A and second laser beam B through light irradiation port 13. Workpiece-side condensing lens 50 may have a chromatic aberration correction function. In this case, condensing positions of first laser beam A and second laser beam B transmitted through workpiece-side condensing lens 50 substantially coincide with each other in the Z direction.

Image sensor (photodetector) 60 is an imaging element that photoelectrically converts brightness and darkness of light formed on light receiving surface 61 into an amount of charge, reads the charge, and converts the charge into an electric signal. Image sensor 60 is disposed on a side of rear surface 41 of dichroic mirror 40. Specifically, image sensor 60 is disposed on the advancing side in the optical axis direction of the rest of first laser beam A reflected by dichroic mirror 40 and the rest of second laser beam B transmitted through dichroic mirror 40. That is, image sensor 60 receives the rest of first laser beam A reflected by dichroic mirror 40 and the rest of second laser beam B transmitted through dichroic mirror 40 on light receiving surface 61.

Aperture 71 is disposed between dichroic mirror 40 and detection-side condensing lens 70 in the optical axis direction. As will be described in detail later, aperture 71 is configured to be able to reduce diameters of first laser beam A and second laser beam B (hereinafter, may be referred to as a beam diameter of first laser beam A and a beam diameter of second laser beam B, respectively) incident on detection-side condensing lens 70.

Detection-side condensing lens 70 is disposed between aperture 71 and image sensor 60 in the optical axis direction. Detection-side condensing lens 70 condenses each of first laser beam A and second laser beam B. Detection-side condensing lens 70 irradiates light receiving surface 61 of image sensor 60 with each of condensed first laser beam A and second laser beam B. Detection-side condensing lens 70 may have a chromatic aberration correction function. In this case, condensing positions of first laser beam A and second laser beam B transmitted through detection-side condensing lens 70 substantially coincide with each other in the Y direction.

A size and curvature of detection-side condensing lens 70 and a distance between detection-side condensing lens 70 and image sensor 60 are set so as to correspond to a condensing state of first laser beam A with which front surface W1 of workpiece W is irradiated. That is, the condensing state of first laser beam A with which light receiving surface 61 of image sensor 60 is irradiated corresponds to the condensing state of first laser beam A with which front surface W1 of workpiece W is irradiated.

Similarly, the size and curvature of detection-side condensing lens 70 and the distance between detection-side condensing lens 70 and image sensor 60 are set so as to correspond to a condensing state of second laser beam B with which front surface W1 of workpiece W is irradiated. That is, the condensing state of second laser beam B with which light receiving surface 61 of image sensor 60 is irradiated corresponds to the condensing state of second laser beam B with which front surface W1 of workpiece W is irradiated.

For example, when a spot diameter (detection-side first spot diameter Daj) of first laser beam A increases on light receiving surface 61 of image sensor 60, a spot diameter (workpiece-side first spot diameter Dai) of first laser beam A with which front surface W1 of workpiece W is irradiated also increases. When the condensing position of second laser beam B is shifted on light receiving surface 61 of image sensor 60, the condensing position of second laser beam B with which front surface W1 of workpiece W is irradiated is also shifted. Note that, in the present exemplary embodiment, the "spot diameter" means a diameter of a laser beam on any image plane (for example, front surface W1 of workpiece W or light receiving surface 61 of image sensor 60), and is not necessarily limited to a diameter at a converging spot of the laser beam.

Mirror-side actuator 80 changes an inclination of bend mirror 30. Mirror-side actuator 80 includes, for example, a tilt shaft and a motor that rotates the tilt shaft. A change of inclination of bend mirror 30 by mirror-side actuator 80 changes a direction of the optical axis of second laser beam B bent by bend mirror 30. As a result, the condensing position of second laser beam B changes.

First lens-side actuator 81 moves first collimator lens 20 in the optical axis direction (Z direction). First lens-side actuator 81 includes, for example, a linear motor. Second lens-side actuator 82 moves second collimator lens 21 in the optical axis direction (Z direction). Second lens-side actuator 82 includes, for example, a linear motor. The movement of each of collimator lenses 20 and 21 in the optical axis direction (Z direction) by each of lens-side actuators 81 and 82 changes spot diameters of first laser beam A and second laser beam B to be described later.

Note that, when each of collimator lenses 20 and 21 is moved in the optical axis direction (Z direction) by each of lens-side actuators 81 and 82, each of collimator lenses 20 and 21 does not necessarily move straight in the optical axis direction (Z direction), but may slightly move or slightly tilt in the horizontal direction (X direction and Y direction) orthogonal to the optical axis direction.

### [Change in beam diameter by aperture]

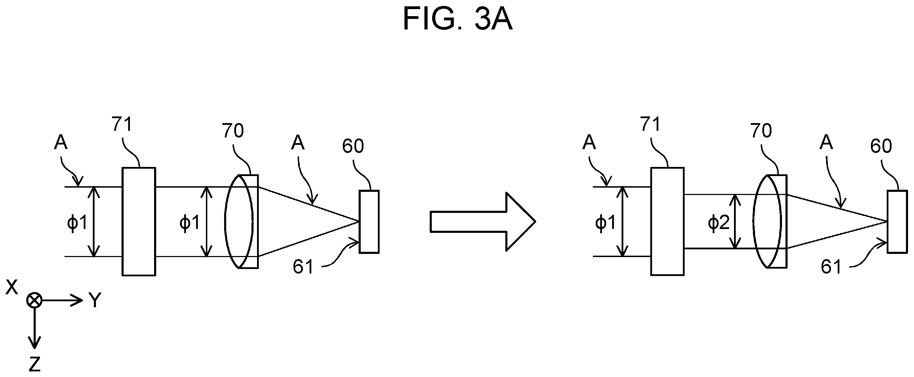

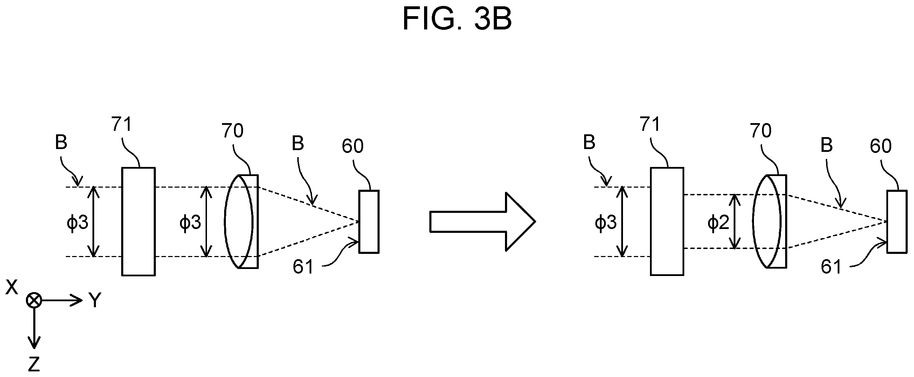

Fig. 3A schematically illustrates a change in the beam diameter of the first laser beam by the aperture, and Fig. 3B schematically illustrates a change in the beam diameter of the second laser beam by the aperture.

In a case where a maximum opening diameter of aperture 71 is larger than each of beam diameter φ1 of first laser beam A and beam diameter φ3 of second laser beam B, as illustrated on a left side of Fig. 3A and a left side of Fig. 3B, first laser beam A and second laser beam B are incident on detection-side condensing lens 70 in a state where original beam diameters are maintained.

However, outputs of first laser beam A and second laser beam B used for laser processing are usually as large as several hundred W to several kW. Accordingly, even though about 1% of these outputs are incident on image sensor 60, the power of the laser beam with which light receiving surface 61 is irradiated reaches several W to several ten W. In this case, the output is too large, and the image acquired by image sensor 60 may cause disturbance such as halation, or a color filter or the like of image sensor 60 may be baked at the time of long-term use. It is necessary to set the size of detection-side condensing lens 70 such that beam diameter φ1 or beam diameter φ3 falls within an effective condensing diameter of detection-side condensing lens 70. When beam diameter φ1 or beam diameter φ3 is larger than a predetermined value, detection-side condensing lens 70 becomes large.

Therefore, the opening diameter of aperture 71 is appropriately narrowed, and thus, the beam diameters of first laser beam A and second laser beam B are reduced to φ2 (φ2 < φ1, φ3) as illustrated on the left side of Fig. 3A and the left side of Fig. 3B. In this way, the diameters of first laser beam A and second laser beam B incident on detection-side condensing lens 70 can be reduced and adjusted to fall within the effective condenser diameter of detection-side condensing lens 70. That is, it is possible to suppress an increase in the size of detection-side condensing lens 70, and eventually laser processing head 10.

The opening diameter of aperture 71 is narrowed, and thus, it is possible to block excessive light fluxes of first laser beam A and second laser beam B and to cause the light fluxes to be incident on light receiving surface 61 of image sensor 60. As a result, it is possible to reduce the power of first laser beam A and second laser beam B incident on light receiving surface 61 and to suppress the occurrence of the above-described problems such as image disturbance and image burn-in of a color filter or the like.

### [Configuration of image sensor]

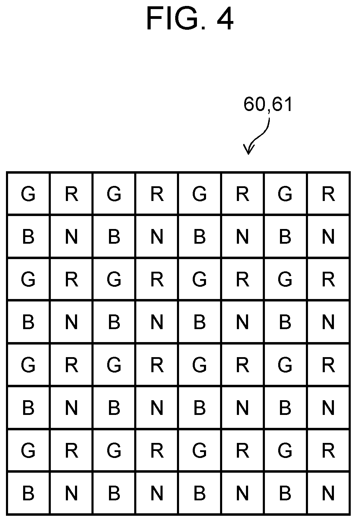

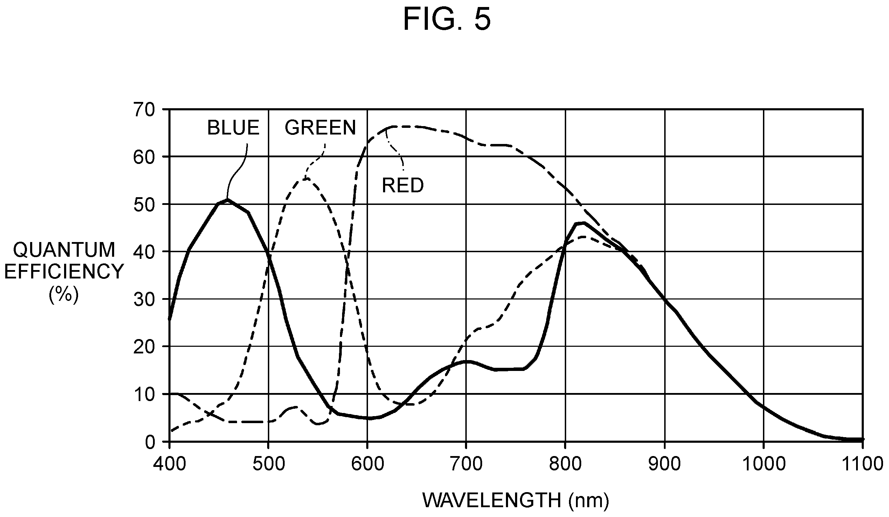

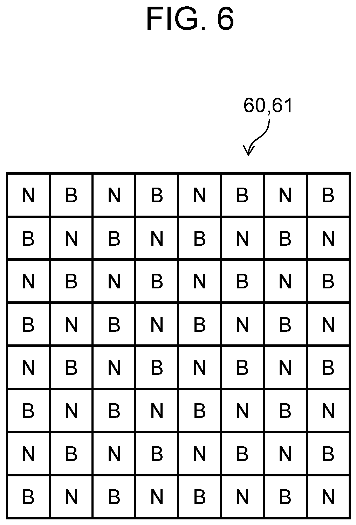

Fig. 4 schematically illustrates a pixel structure of the image sensor. Fig. 5 illustrates a relationship between light receiving efficiency and a wavelength of an RGB pixel. Fig. 6 schematically illustrates another pixel structure of the image sensor.

As illustrated in Fig. 4, image sensor 60 has arrays in units of a total of four pixels including a pixel that receives near-infrared light or infrared light (hereinafter, referred to as an N pixel), a pixel that receives red light (hereinafter, referred to as an R pixel), a pixel that receives green light (hereinafter, referred to as a G pixel), and a pixel that receives blue light (hereinafter, referred to as a B pixel). Specifically, the array is a color filter array in which one G pixel is replaced with the N pixel as compared with a known Bayer array.

As illustrated in Fig. 5, the R pixel has high quantum efficiency of photoelectrically converting light having a wavelength band ranging from about 600 nm to 850 nm inclusive, and efficiently converts light of normal red light (from about 600 nm to 700 nm inclusive) into an electrical signal. The G pixel has high quantum efficiency of photoelectrically converting light having a wavelength band ranging from about 500 nm to 550 nm inclusive, and efficiently converts light of normal green light (from about 500 nm to 550 nm inclusive) into an electrical signal. The B pixel has high quantum efficiency of photoelectrically converting light having a wavelength band ranging from about 400 nm to 500 nm inclusive, and efficiently converts light of normal blue light (from about 420 nm to 480 nm inclusive) into an electrical signal. Note that, although not illustrated, the N pixel has high quantum efficiency of photoelectrically converting light having a wavelength band ranging from about 900 nm to 1200 nm inclusive, and efficiently converts light of near-infrared light or infrared light (from about 900 nm to 1200 nm inclusive) into an electrical signal.

As described above, a wavelength of first laser beam A ranges from about 900 nm to 1200 nm inclusive, and a wavelength of second laser beam B ranges from about 400 nm to 450 nm inclusive. Thus, due to the use of image sensor 60 illustrated in Fig. 4, first laser beam A and second laser beam B transmitted through detection-side condensing lens 70 can be reliably converted into electric signals. A size of each pixel is appropriately set, and thus, it is possible to grasp a two-dimensional distribution of each of first laser beam A and second laser beam B on light receiving surface 61. As will be described later, the condensing positions and spot diameters of first laser beam A and second laser beam B on front surface W1 of workpiece W can be corrected based on the two-dimensional distribution and the spot diameters of first laser beam A and second laser beam B on light receiving surface 61.

Note that, from the viewpoint of reliably converting each of first laser beam A and second laser beam B into an electric signal, only two types of B pixels and N pixels may be periodically arrayed as illustrated in Fig. 6. In a case where second laser beam B is green light, the B pixels may be replaced with the G pixels in Fig. 6. That is, image sensor 60 includes a plurality of first light receivers (N pixels) that receive light rays in a first wavelength band including the wavelength of first laser beam A, for example, 900 nm to 1200 nm. Image sensor 60 includes a plurality of second light receivers (B pixels and/or G pixels) that receive light rays in a second wavelength band including the wavelength of second laser beam B, for example, 400 nm to 600 nm. The image sensor may have a pixel structure in which a plurality of first light receivers and a plurality of second light receivers are periodically arrayed on light receiving surface 61.

### [Monitoring and adjustment of condensing state]

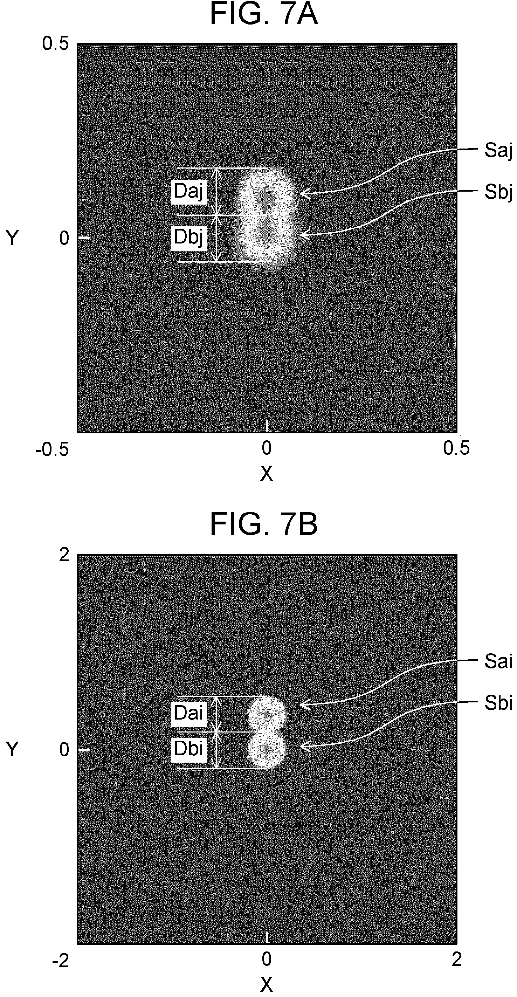

In a case where laser processing is actually performed on workpiece W, it is not possible to monitor the condensing state of each of first laser beam A and second laser beam B on front surface W1. On the other hand, in the present exemplary embodiment, as described above, the condensing states of first laser beam A and second laser beam B with which light receiving surface 61 of image sensor 60 is irradiated correspond to the condensing states of first laser beam A and second laser beam B with which front surface W1 of workpiece W is irradiated. That is, the condensing state on front surface W1 of workpiece W can be monitored based on spot images (see, for example, Fig. 7A) of first laser beam A and second laser beam B with which light receiving surface 61 of image sensor 60 is irradiated.

In a case where the condensing position of first laser beam A and the condensing position of second laser beam B are shifted due to a misalignment of the optical axes of two laser beams, for example, mirror-side actuator 80 can be tilted to cause the condensing positions of two laser beams to coincide with each other. For example, in a case where the spot image of first laser beam A with which light receiving surface 61 of image sensor 60 is irradiated is defocused, first lens-side actuator 81 is driven to cancel a defocus state. In this way, first laser beam A can be focused on front surface W1 of workpiece W. Similarly, in a case where the spot image of second laser beam B with which light receiving surface 61 of image sensor 60 is irradiated is defocused, second lens-side actuator 82 is driven to cancel a defocus state. In this way, second laser beam B can be focused on front surface W1 of workpiece W.

### [Effects and the like]

As described above, laser processing head 10 according to the present exemplary embodiment includes housing 11 and a plurality of optical components disposed inside housing 11.

First light entrance port 12a through which first laser beam A is incident, second light entrance port 12b through which second laser beam B is incident, and light irradiation port 13 through which first laser beam A and second laser beam B are emitted to the outside are provided in housing 11. Second laser beam B has a shorter wavelength than first laser beam A.

The plurality of optical components include at least bend mirror 30 that is provided in an optical path of second laser beam B and reflects second laser beam B to change the optical path, and dichroic mirror 40 that is provided in an optical path of first laser beam A and in the optical path of second laser beam B reflected by bend mirror 30.

The plurality of optical components include aperture 71 that is provided in the optical path of second laser beam B transmitted through dichroic mirror 40 and in the optical path of first laser beam A reflected by dichroic mirror 40, and detection-side condensing lens 70 provided in the optical paths of first laser beam A and second laser beam B transmitted through aperture 71.

Image sensor (photodetector) 60 is disposed inside housing 11 at a position where first laser beam A and second laser beam B transmitted through detection-side condensing lens 70 are receivable.

Dichroic mirror 40 transmits most of first laser beam A to be directed to light irradiation port 13, and reflects the rest of first laser beam A to be directed to aperture 71. Aperture 71 transmits most of second laser beam B to be directed to light irradiation port 13, and reflects the rest of second laser beam B to be directed to aperture 71.

Aperture 71 is configured to be able to reduce the diameters of first laser beam A and second laser beam B incident on detection-side condensing lens 70.

Aperture 71 is a diaphragm jig for first laser beam A and second laser beam B, and usually, a thickness in the optical axis direction may be thin, and a size in the diameter direction (Z direction in Fig. 2) of the laser beam may be any size as long as first laser beam A and second laser beam B can pass through the aperture. On the other hand, in a case where the diameter of detection-side condensing lens 70 is increased such that first laser beam A and second laser beam B fall within an effective diameter, it is necessary to change the curvature and the like. In the example illustrated in Fig. 2, a thickness in the Y direction may greatly increase.

According to the present exemplary embodiment, aperture 71 is provided, and thus, the diameters of first laser beam A and second laser beam B incident on detection-side condensing lens 70 can be reduced. Accordingly, it is possible to suppress an increase in the size of detection-side condensing lens 70 and eventually laser processing head 10.

The opening diameter of aperture 71 is narrowed, and thus, it is possible to block excessive light fluxes of first laser beam A and second laser beam B and to cause the light fluxes to be incident on light receiving surface 61 of image sensor 60. As a result, it is possible to reduce the power of first laser beam A and second laser beam B incident on light receiving surface 61 and to suppress the occurrence of the above-described problems such as image disturbance and image burn-in of a color filter or the like. This will be further described.

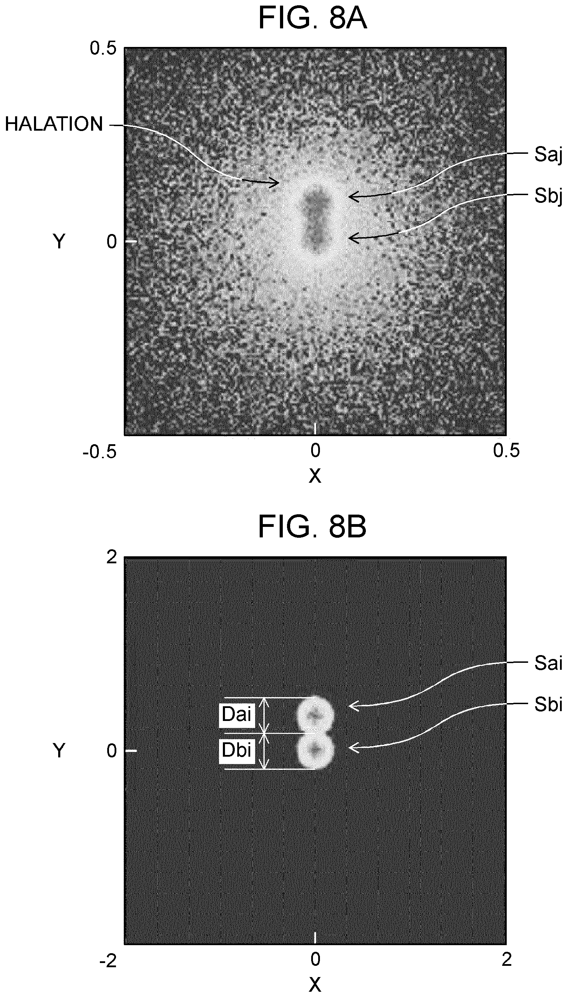

Fig. 7A illustrates an example of the spot image of the first laser beam and the second laser beam condensed on the light receiving surface of the image sensor, and Fig. 7B illustrates an example of the spot image of the first laser beam and the second laser beam condensed on the front surface of the workpiece. Fig. 8A illustrates a diagram corresponding to Fig. 7A according to a comparative example, and Fig. 8B illustrates a diagram corresponding to Fig. 7B according to the comparative example. Note that, Figs. 8A and 8B correspond to a case where aperture 71 is not provided in laser processing head 10 or aperture 71 is not operated.

An arrangement relationship between the optical components inside laser processing head 10 is appropriately set, and thus, first laser beam A and second laser beam B are condensed to coincide with each other or be in proximity to each other on front surface W1 of workpiece W as illustrated in Figs. 7B and 8B. Workpiece-side first spot Sai of first laser beam A and workpiece-side second spot Sbi of second laser beam B are both adjusted to have sizes suitable for processing. Workpiece-side first spot diameter Dai of first laser beam A and workpiece-side second spot diameter Dbi of second laser beam B are both adjusted to have sizes suitable for processing.

However, in a case where aperture 71 is not provided in laser processing head 10, as described above, the power of each of first laser beam A and second laser beam B incident on light receiving surface 61 of image sensor 60 may become too large. In this case, for example, as illustrated in Fig. 8A, halation occurs on an imaging screen, and it is difficult to clearly separate and identify detection-side first spot Saj of first laser beam A and detection-side second spot Sbj of second laser beam A.

On the other hand, according to the present exemplary embodiment, aperture 71 is provided in laser processing head 10, and thus, the power and the diameter of each of first laser beam A and second laser beam B incident on detection-side condensing lens 70 can be appropriately reduced. In this case, for example, as illustrated in Fig. 7A, the occurrence of halation or the like can be eliminated, and the disturbance of the image can be suppressed. Detection-side first spot Saj of first laser beam A and detection-side second spot Sbj of second laser beam A can be clearly separated and identified. Detection-side first spot diameter Daj of first laser beam A and detection-side second spot diameter Dbj of second laser beam A can be measured. It is possible to suppress occurrence of problems such as image burn-in of the color filter and the like as described above. As a result, the condensing positions of first laser beam A and second laser beam B on front surface W1 of workpiece W can be adjusted based on images of first laser beam A and second laser beam B acquired by image sensor 60.

Inside housing 11, first collimator lens 20 is provided between first light entrance port 12a and dichroic mirror 40 in the Z direction. Second collimator lens 21 is provided between second light entrance port 12b and bend mirror 30. Workpiece-side condensing lens 50 is provided between dichroic mirror 40 and light irradiation port 13.

First collimator lens 20 collimates first laser beam A and causes collimated first laser beam A to be incident on dichroic mirror 40. Second collimator lens 21 collimates second laser beam B and causes collimated second laser beam B to be incident on bend mirror 30. Workpiece-side condensing lens 50 condenses each of incident first laser beam A and second laser beam B at predetermined condensing positions.

In the present exemplary embodiment, the above configuration can make the optical axis of first laser beam A and the optical axis of second laser beam B directed from light irradiation port 13 to workpiece W substantially coincide with each other. First laser beam A and second laser beam B can be focused on front surface W1 of workpiece W. As a result, the condensing positions of first laser beam A and second laser beam B on front surface W1 of workpiece W can be made substantially coincide with each other.

Image sensor (photodetector) 60 includes at least a plurality of first light receivers that receive light rays in a first wavelength band including the wavelength of first laser beam A and a plurality of second light receivers that receive light rays in a second wavelength band including the wavelength of second laser beam B. The plurality of first light receivers and the plurality of second light receivers are periodically arrayed on light receiving surface 61 of image sensor 60.

Such a configuration of image sensor 60 makes it possible to acquire the spot images of first laser beam A and second laser beam B with high resolution. As a result, the condensing positions of first laser beam A and second laser beam B on front surface W1 of workpiece W can be adjusted precisely.

Image sensor 60 preferably has a structure in which four pixels that respectively receive near-infrared light or infrared light, red light, green light, and blue light are periodically arrayed on light receiving surface 61.

This pixel structure, which is a known configuration and does not use a photodetector having a special structure, can suppress an increase in cost of laser processing head 10. Since an output signal of image sensor 60 can be processed by using a known signal processing device, an increase in a load of signal processing can be suppressed.

Laser processing system (laser processing apparatus) 1 according to the present exemplary embodiment includes at least laser processing head 10, first laser oscillator 2 that emits first laser beam A, and second laser oscillator 3 that emits second laser beam B.

Laser processing system 1 further includes first optical fiber 4 that is connected to first light entrance port 12a and transmits first laser beam A emitted from first laser oscillator 2 to laser processing head 10, and second optical fiber 5 that is connected to second light entrance port 12b and transmits second laser beam B emitted from second laser oscillator 3 to laser processing head 10.

Laser processing head 10 irradiates workpiece W with at least one of first laser beam A or second laser beam B.

In the present exemplary embodiment, the condensing positions of first laser beam A and second laser beam B on front surface W1 of workpiece W can be made substantially coincide with each other. As a result, in a case where laser processing is performed on workpiece W in a state where first laser beam A and second laser beam B are superimposed on each other, processing accuracy and processing quality can be improved.

Laser processing system 1 may further include manipulator 6 that movably holds laser processing head 10. In this way, laser processing can be easily performed on workpiece W having a complicated structure.

In laser processing system 1, the condensing positions of first laser beam A and second laser beam B on front surface W1 of workpiece W can be adjusted based on the images of first laser beam A and second laser beam B acquired by image sensor 60. In this way, it is easy to set the condensing positions of first laser beam A and second laser beam B on front surface W1 of workpiece W to desired positions. As a result, this configuration can improve the processing accuracy and processing quality during the laser processing.

### <Modification>

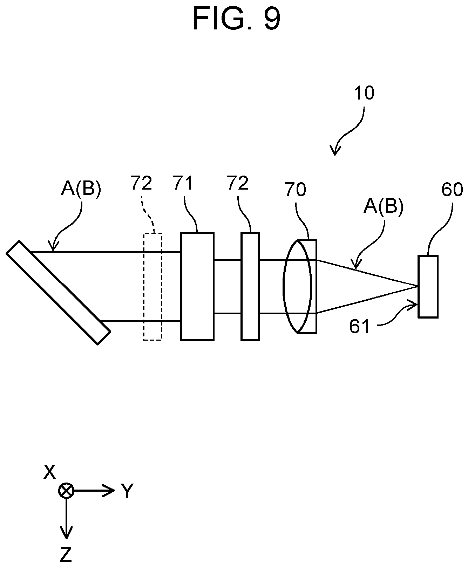

Fig. 9 schematically illustrates a main part of an internal structure of a laser processing head according to the present modification.

Laser processing head 10 of the present modification illustrated in Fig. 9 is different from the laser processing head illustrated in Fig. 2 in that light reducing filter 72 is disposed between aperture 71 and detection-side condensing lens 70.

As described above, the outputs of first laser beam A and second laser beam B may reach several kW. Note that, depending on reflectance (transmittance) of first laser beam A and second laser beam B in dichroic mirror 40, even though an excessive light flux is blocked by aperture 71, the power of first laser beam A and second laser beam B may become too large on light receiving surface 61 of image sensor 60.

In such a case, light reducing filter 72 is provided as illustrated in Fig. 9, and thus, the power of first laser beam A and second laser beam B incident on light receiving surface 61 of image sensor 60 can be reduced. As a result, it is possible to reduce the occurrence of problems such as image burn-in of image sensor 60. Even at the time of long-term use, it is possible to acquire clear images of detection-side first spot Saj of first laser beam A and detection-side second spot Sbj of second laser beam B.

Note that, the characteristics of light reducing filter 72 are set so as to reduce light having the same wavelength as first laser beam A and second laser beam B at a predetermined ratio. On the other hand, in laser processing system 1, first laser beam A is often set to have a larger output than second laser beam B. Thus, light reducing filter 72 may reduce only light having the same wavelength as first laser beam A. That is, light reducing filter 72 is configured to reduce at least light having the same wavelength as first laser beam A.

Note that, as indicated by a broken line in Fig. 9, light reducing filter 72 may be disposed between dichroic mirror 40 and aperture 71.

In the present modification, aperture 71 between dichroic mirror 40 and image sensor 60 is provided, and thus, the diameters of first laser beam A and second laser beam B incident on detection-side condensing lens 70 can be reduced. As a result, it is possible to suppress an increase in the size of detection-side condensing lens 70 and eventually laser processing head 10.

### INDUSTRIAL APPLICABILITY

The present disclosure is useful because of being applicable to a laser processing head and a laser processing system that emit laser beams having wavelengths different from each other.

### REFERENCE MARKS IN THE DRAWINGS

- F: laser processing direction
- W: workpiece
- W1: front surface (image plane)
- A: first laser beam
- Sai: workpiece-side first spot
- Dai: workpiece-side first spot diameter
- Saj: detection-side first spot
- Daj: detection-side first spot diameter
- B: second laser beam
- Sbi: workpiece-side second spot
- Dbi: workpiece-side second spot diameter
- Sbj: detection-side second spot
- Dbj: detection-side second spot diameter
- 1: laser processing system
- 2: first laser oscillator
- 3: second laser oscillator
- 4: first optical fiber
- 5: second optical fiber
- 10: laser processing head
- 20: first collimator lens
- 21: second collimator lens
- 30: bend mirror
- 40: dichroic mirror
- 50: workpiece-side condensing lens
- 60: image sensor (photodetector)
- 61: light receiving surface
- 70: detection-side condensing lens
- 71: aperture
- 72: light reducing filter
- 80: mirror-side actuator (adjuster)
- 81: first lens-side actuator (adjuster)
- 82: second lens-side actuator (adjuster)

## Claims

1. A laser processing head comprising:
a housing; and
a plurality of optical components disposed inside the housing,
wherein
the housing includes
a first light entrance port through which a first laser beam is incident,
a second light entrance port through which a second laser beam having a wavelength different from the first laser beam is incident, and
a light irradiation port through which the first laser beam and the second laser beam are emitted to an outside,
the plurality of optical components include at least
a bend mirror that is provided in an optical path of the second laser beam, and reflects the second laser beam to change the optical path,
a dichroic mirror that is provided in an optical path of the first laser beam, the dichroic mirror being provided in the optical path of the second laser beam reflected by the bend mirror,
an aperture that is provided in the optical paths of the second laser beam transmitted through the dichroic mirror, the aperture being provided in the optical path of the first laser beam reflected by the dichroic mirror, and
a detection-side condensing lens that is provided in the optical paths of the first laser beam and the second laser beam transmitted through the aperture,
a photodetector is disposed inside the housing, the photodetector being at a position where the first laser beam and the second laser beam transmitted through the detection-side condensing lens are receivable,
the dichroic mirror
transmits most of the first laser beam to be directed to the light irradiation port, and reflects a rest of the first laser beam to be directed to the aperture, and
reflects most of the second laser beam to be directed to the light irradiation port, and transmits a rest of the second laser beam to be directed to the aperture, and
the aperture is configured to be able to reduce diameters of the first laser beam and the second laser beam incident on the detection-side condensing lens.

2. The laser processing head according to Claim 1, wherein
inside the housing,
a first collimator lens is provided between the first light entrance port and the dichroic mirror,
a second collimator lens is provided between the second light entrance port and the dichroic mirror, and
a workpiece-side condensing lens is provided between the dichroic mirror and the light irradiation port,
the first collimator lens collimates the first laser beam, and causes the collimated laser beam to be incident on the dichroic mirror,
the second collimator lens collimates the second laser beam, and causes the collimated laser beam to be incident on the bend mirror, and
the workpiece-side condensing lens condenses the incident first laser beam and second laser beam to predetermined condensing positions.

3. The laser processing head according to Claim 1 or 2, wherein
the photodetector includes at least
a plurality of first light receivers that receive light rays in a first wavelength band including a wavelength of the first laser beam, and
a plurality of second light receives that receive light rays in a second wavelength band including a wavelength of the second laser beam, and
the plurality of first light receivers and the plurality of second light receivers are periodically arrayed on a light receiving surface of the photodetector.

4. The laser processing head according to Claim 3, wherein the photodetector is an image sensor in which four pixels that receive near-infrared light or infrared light, red light, green light, and blue light are periodically arrayed on the light receiving surface.

5. The laser processing head according to any one of Claims 1 to 4, further comprising a light reducing filter that is disposed between the dichroic mirror and the aperture or between the aperture and the detection-side condensing lens,
wherein the light reducing filter reduces at least light having a same wavelength as the first laser beam.

6. A laser processing system comprising at least:
the laser processing head according to any one of Claims 1 to 5;
a first laser oscillator that emits the first laser beam;
a second laser oscillator that emits the second laser beam;
a first optical fiber that is connected to the first light entrance port and transmits the first laser beam emitted from the first laser oscillator to the laser processing head; and
a second optical fiber that is connected to the second light entrance port and transmits the second laser beam emitted from the second laser oscillator to the laser processing head,
wherein the laser processing head irradiates a workpiece with at least one of the first laser beam and the second laser beam.

7. The laser processing system according to Claim 6, further comprising a manipulator that movably holds the laser processing head.

8. The laser processing system according to Claim 6 or 7, wherein condensing positions of the first laser beam and the second laser beam on a front surface of the workpiece are configured to be adjustable based on images of the first laser beam and the second laser beam acquired by the photodetector.

## Patentansprüche

1. Laserbearbeitungskopf, umfassend:
ein Gehäuse; und
eine Vielzahl von optischen Bauteilen, die innerhalb des Gehäuses angeordnet sind,
wobei
das Gehäuse umfasst
eine erste Lichteingangsöffnung, durch die ein erster Laserstrahl einfällt,
eine zweite Lichteingangsöffnung, durch die ein zweiter Laserstrahl, der eine Wellenlänge aufweist, die sich von dem ersten Laserstrahl unterscheidet, einfällt, und
eine Lichtbestrahlungsöffnung, durch die der erste Laserstrahl und der zweite Laserstrahl zu einer Außenseite emittiert werden,
die Vielzahl von optischen Bauteilen mindestens umfassen
einen Ablenkspiegel, der in einem Strahlengang des zweiten Laserstrahls bereitgestellt ist und den zweiten Laserstrahl reflektiert, um den Strahlengang zu ändern,
einen dichroitischen Spiegel, der in einem Strahlengang des ersten Laserstrahls bereitgestellt ist, wobei der dichroitische Spiegel im Strahlengang des zweiten Laserstrahls bereitgestellt ist, der von dem Ablenkspiegel reflektiert wird,
eine Apertur, die in den Strahlengängen des zweiten Laserstrahls bereitgestellt ist, der durch den dichroitischen Spiegel durchgelassen wird, wobei die Apertur in dem Strahlengang des ersten Laserstrahls bereitgestellt ist, der von dem dichroitischen Spiegel reflektiert wird, und
eine detektionsseitige Kondensorlinse, die in den Strahlengängen des ersten Laserstrahls und des zweiten Laserstrahls bereitgestellt ist, die durch die Apertur durchgelassen werden,
ein Photodetektor im Inneren des Gehäuses angeordnet ist, wobei der Photodetektor sich an einer Position befindet, wo der erste Laserstrahl und der zweite Laserstrahl, die durch die detektionsseitige Kondensorlinse durchgelassen werden, empfangbar sind,
der dichroitische Spiegel
das meiste des ersten Laserstrahls, der zu der Lichtbestrahlungsöffnung zu richten ist, durchlässt und einen Rest des ersten Laserstrahls, der zur Apertur zu richten ist, reflektiert, und
das meiste des zweiten Laserstrahls, der zu der Lichtbestrahlungsöffnung zu richten ist, reflektiert und einen Rest des zweiten Laserstrahls, der zur Apertur zu richten ist, durchlässt, und
die Apertur dazu ausgestaltet ist, in der Lage zu sein, Durchmesser des ersten Laserstrahls und des zweiten Laserstrahls zu vermindern, die auf der detektionsseitigen Kondensorlinse einfallen.

2. Laserbearbeitungskopf nach Anspruch 1, wobei im Inneren des Gehäuses
eine erste Kollimatorlinse zwischen der ersten Lichteingangsöffnung und dem dichroitischen Spiegel bereitgestellt ist,
eine zweite Kollimatorlinse zwischen der zweiten Lichteingangsöffnung und dem dichroitischen Spiegel bereitgestellt ist, und
eine werkstückseitige Kondensorlinse zwischen dem dichroitischen Spiegel und der Lichtbestrahlungsöffnung bereitgestellt ist,
die erste Kollimatorlinse den ersten Laserstrahl kollimiert und den kollimierten Laserstrahl veranlasst, auf dem dichroitischen Spiegel einzufallen,
die zweite Kollimatorlinse den zweiten Laserstrahl kollimiert und den kollimierten Laserstrahl veranlasst, auf dem Ablenkspiegel einzufallen, und
die werkstückseitige Kondensorlinse den einfallenden ersten Laserstrahl und zweiten Laserstrahl auf vorbestimmten Kondensationspositionen kondensiert.

3. Laserbearbeitungskopf nach Anspruch 1 oder 2, wobei
der Photodetektor mindestens umfasst
eine Vielzahl von ersten Lichtempfängern, die Lichtstrahlen in einem ersten Wellenlängenband empfangen, das eine Wellenlänge des ersten Laserstrahls umfasst, und
eine Vielzahl von zweiten Lichtempfängern, die Lichtstrahlen in einem zweiten Wellenlängenband empfangen, das eine Wellenlänge des zweiten Laserstrahls umfasst, und
die Vielzahl von ersten Lichtempfängern und die Vielzahl von zweiten Lichtempfängern periodisch auf einer Lichtempfangsoberfläche des Photodetektors aufgereiht sind.

4. Laserbearbeitungskopf nach Anspruch 3, wobei der Photodetektor ein Bildsensor ist, in dem vier Pixel, die Nahinfrarotlicht oder Infrarotlicht, rotes Licht, grünes Licht und blaues Licht empfangen, periodisch auf der Lichtempfangsoberfläche aufgereiht sind.

5. Laserbearbeitungskopf nach einem der Ansprüche 1 bis 4, ferner umfassend ein Lichtreduktionsfilter, das zwischen dem dichroitischen Spiegel und der Apertur oder zwischen der Apertur und der detektionsseitigen Kondensorlinse angeordnet ist,
wobei das Lichtreduktionsfilter mindestens Licht reduziert, das eine gleiche Wellenlänge wie der erste Laserstrahl aufweist.

6. Laserbearbeitungssystem, mindestens umfassend:
den Laserbearbeitungskopf nach einem der Ansprüche 1 bis 5;
einen ersten Laseroszillator, der den ersten Laserstrahl emittiert;
einen zweiten Laseroszillator, der den zweiten Laserstrahl emittiert;
eine erste optische Faser, die mit der ersten Lichteingangsöffnung verbunden ist und den ersten Laserstrahl, der von dem ersten Laseroszillator emittiert wird, zum Laserbearbeitungskopf durchlässt; und
eine zweite optische Faser, die mit der zweiten Lichteingangsöffnung verbunden ist und den zweiten Laserstrahl, der von dem zweiten Laseroszillator emittiert wird, zum Laserbearbeitungskopf durchlässt,
wobei der Laserbearbeitungskopf ein Werkstück mit mindestens einem von dem ersten Laserstrahl und dem zweiten Laserstrahl bestrahlt.

7. Laserbearbeitungssystem nach Anspruch 6, ferner umfassend einen Manipulator, der den Laserbearbeitungskopf beweglich hält.

8. Laserbearbeitungssystem nach Anspruch 6 oder 7, wobei Kondensationspositionen des ersten Laserstrahls und des zweiten Laserstrahls auf einer vorderen Oberfläche des Werkstücks dazu ausgestaltet sind, basierend auf Bildern des ersten Laserstrahls und des zweiten Laserstrahls, die von dem Photodetektor erfasst werden, einstellbar zu sein.

## Revendications

1. Tête de traitement laser comprenant :
un logement ; et
une pluralité de composants optiques disposés à l'intérieur du logement,
dans laquelle
le logement comporte
un premier port d'entrée de lumière par lequel un premier faisceau laser est incident,
un deuxième port d'entrée de lumière par lequel un deuxième faisceau laser ayant une longueur d'onde différente du premier faisceau laser est incident, et
un port d'irradiation de lumière par lequel le premier faisceau laser et le deuxième faisceau laser sont émis vers un extérieur,
la pluralité de composants optiques comportant au moins
un miroir incurvé qui est prévu sur un trajet optique du deuxième faisceau laser, et qui réfléchit me deuxième faisceau laser afin de modifier le trajet optique,
un miroir dichroïque qui est prévu sur un trajet optique du premier faisceau laser, le miroir dichroïque étant prévu sur le trajet optique du deuxième faisceau laser réfléchi par le miroir incurvé,
une ouverture qui est prévue sur les trajets optiques du deuxième faisceau laser transmis par le biais du miroir dichroïque, l'ouverture étant prévue sur le trajet optique du premier faisceau laser réfléchi par le miroir dichroïque, et
une lentille de condensation côté détection qui est prévue sur les trajets optiques du premier faisceau laser et du deuxième faisceau laser transmis par le biais de l'ouverture,
un photodétecteur qui est disposé à l'intérieur du logement, le photodétecteur étant à un emplacement auquel le premier faisceau laser et le deuxième faisceau laser transmis par le biais de la lentille de condensation côté détection peuvent être reçus,
le miroir dichroïque qui transmet la majeure partie du premier faisceau laser à diriger vers le port d'irradiation de lumière, et réfléchit le reste du premier faisceau laser à diriger vers l'ouverture, et
qui réfléchit la majeure partie du deuxième faisceau laser à diriger vers le port d'irradiation de lumière, et transmet le reste du deuxième faisceau laser à diriger vers l'ouverture,
et
l'ouverture qui est configurée pour pouvoir réduire les diamètres du premier faisceau laser et du deuxième faisceau laser incidents sur la lentille de condensation côté détection.

2. Tête de traitement laser selon la revendication 1, dans laquelle
à l'intérieur du logement,
une première lentille de collimation est prévue entre le premier port d'entrée de lumière et le miroir dichroïque,
une deuxième lentille de collimation est prévue entre le deuxième port d'entrée de lumière et le miroir dichroïque, et
une lentille de condensation côté pièce à usiner est prévue entre le miroir dichroïque et le port d'irradiation de lumière,
la première lentille de collimation collimate le premier faisceau laser, et permet au faisceau laser collimaté d'être incident sur le miroir dichroïque,
la deuxième lentille de collimation collimate le deuxième faisceau laser, et permet au faisceau laser collimaté d'être incident sur le miroir incurvé, et
la lentille de condensation côté pièce à usiner condense le premier faisceau laser et le deuxième faisceau laser incidents par rapport à des emplacements de condensation prédéterminés.

3. Tête de traitement laser selon la revendication 1 ou 2, dans laquelle
le photodétecteur comporte au moins
une pluralité de premiers récepteurs de lumière qui reçoivent des rayons lumineux sur une première bande de longueurs d'onde comportant une longueur d'onde du premier faisceau laser, et
une pluralité de deuxièmes récepteurs de lumière qui reçoivent des rayons lumineux sur une deuxième bande de longueurs d'onde comportant une longueur d'onde du deuxième faisceau laser, et
la pluralité de premiers récepteurs de lumière et la pluralité de deuxièmes récepteurs de lumière sont disposées de manière périodique sur une surface de réception de lumière du photodétecteur.

4. Tête de traitement laser selon la revendication 3, dans laquelle le photodétecteur est un capteur d'image dans lequel quatre pixels qui reçoivent une lumière en proche infrarouge ou une lumière infrarouge, une lumière rouge, une lumière verte et une lumière bleue sont disposés de manière périodique sur la surface de réception de lumière.

5. Tête de traitement laser selon l'une quelconque des revendications 1 à 4, comprenant en outre un filtre de réduction de lumière qui est disposé entre le miroir dichroïque et l'ouverture ou entre l'ouverture et la lentille de condensation côté détection,
dans laquelle le filtre de réduction de lumière réduit au moins la lumière ayant une longueur d'onde identique au premier faisceau laser.

6. Système de traitement laser comprenant au moins :
la tête de traitement laser selon l'une quelconque des revendications 1 à 5 ;
un premier oscillateur laser qui émet le premier faisceau laser ;
un deuxième oscillateur laser qui émet le deuxième faisceau laser ;
une première fibre optique qui est reliée au premier port d'entrée de lumière et transmet le premier faisceau laser émis par le premier oscillateur laser à la tête de traitement laser ; et
une deuxième fibre optique qui est reliée au deuxième port d'entrée de lumière et transmet le deuxième faisceau laser émis par le deuxième oscillateur laser à la tête de traitement laser,
dans lequel la tête de traitement laser irradie une pièce à usiner avec au moins l'un du premier faisceau laser et du deuxième faisceau laser.

7. Système de traitement laser selon la revendication 6, comprenant rn outre un manipulateur qui maintient de manière mobile la tête de traitement laser.

8. Système de traitement laser selon la revendication 6 ou 7, dans lequel les emplacements de condensation du premier faisceau laser et du deuxième faisceau laser sur une surface avant de la pièce à usiner sont configurés pour être réglables sur la base d'images du premier faisceau laser et du deuxième faisceau laser acquises par le photodétecteur.
